# EUROPÄISCHE PATENTANMELDUNG

(11) **EP 1 108 696 A1**
(43) Veröffentlichungstag der Anmeldung: **20.06.2001**
(21) Anmeldenummer: 99204368.7
(22) Anmeldetag: 17.12.1999
(51) Int. Cl.: C04B 18/28

(54) **Verfahren zur Vormineralisierung von nachwachsenden Rohstoffen, Verwendung der vormineralisierten Rohstoffe zur Herstellung von Beton und Bauteilen und -stoffen sowie die damit hergestellten Bauteile und -stoffe**

(71) Anmelder: Höhn, Heribert, 7511 Rollingen, Mersch (LU); Trierweiler, Matthias, 54528 Salmtal, Dörbach (DE)
(72) Erfinder: Höhn, Heribert, 7511 Rollingen, Mersch (LU); Höhn, Jochen, 7511 Rollingen, Mersch (LU)
(74) Vertreter: Schmitt, Armand

(57) **Zusammenfassung**

Nachwachsende, fasrige Rohstoffe wie Nadelholzteilchen und zerkleinerte oder gemahlene Hanfstängel und Schilfrohrstängel werden mit einem Portlandzement-Wassergemisch vormineralisiert und dann verwendet zur Herstellung von Holzbeton, sowie anderen Bauteilen und Baustoffen.

## Beschreibung

Die Erfindung bezieht sich auf ein Verfahren zur Vormineralisierung von nachwachsenden faserigen Rohstoffteilchen wie z.B. Holz-, Hanf- und Schilfrohrteilchen oder dergleichen, insbesondere zur Verwendung für die Herstellung von wärmedämmendem Holzbeton, Bausteinen, Wandteilen, Dämmplatten, Mörtel wie z.B. Fertigmörtel für Innen- und Aussenputz, und dergleichen, sowie auch auf ein Verfahren zur Herstellung von Holzbetonfertigbauteilen mit einer tragenden Holzfachwerkstruktur. Ausserdem betrifft die Erfindung Bauteile und Fertigmörtel aus den vormineralisierten Rohstoffteilchen, Holzbetonfertigbauteile mit einer tragenden Holzfachwerkstruktur und ein Verfahren zur Herstellung dieser Fertigbauteile sowie Holzbeton aus den vormineralisierten Holzspänen.

Im Bauwesen ist Holzbeton seit längerer Zeit bekannt. Zur Herstellung von Holzbeton werden Holzteilchen, wie z.B. Holzspäne oder Sägemehl zuerst vormineralisiert und können dann durch Zuschlag von Bindemittel und Anmachwasser zu Holzbeton verarbeitet werden. Zur Vormineralisierung wird im Stand der Technik üblicherweise Aluminiumsulfat und Cefkaform benutzt. Diese Mineralisatoren sind nicht ökologisch und auch nicht vereinbar mit der Anforderung für preiswerte Baustoffe.

Aufgabe der Erfindundung ist es, dementsprechend ein Verfahren zu schaffen zur Mineralisierung von nachwachsenden, faserigen Rohstoffteilchen wie z.B. Holz-, Hanf- und Schilfrohrteilchen oder dergleichen, das preiswert und ökologisch ist. Das Schaffen von preiswertem, ökologischem und wärmedämmendem Holzbeton sowie Bausteine, Wandteile, Dämmplatten, Mörtel wie z.B. Fertigmörtel für Innen- und Aussenputz ist auch Teil der Aufgabe der Erfindung.

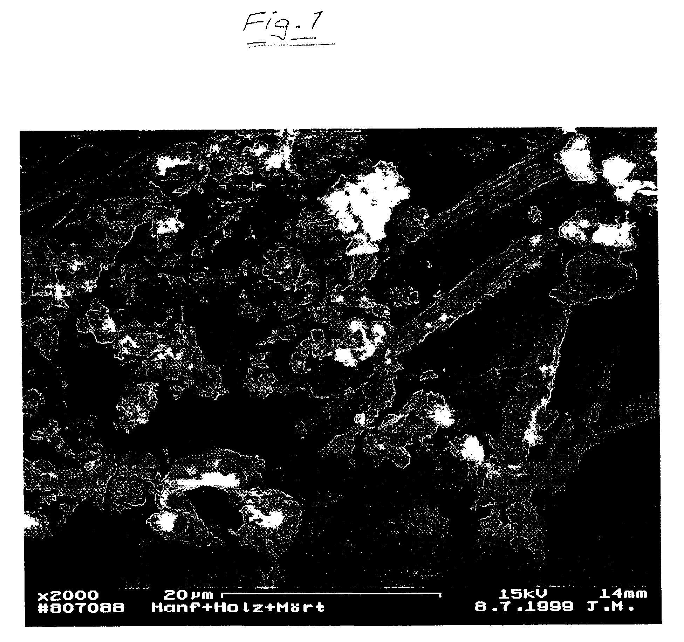

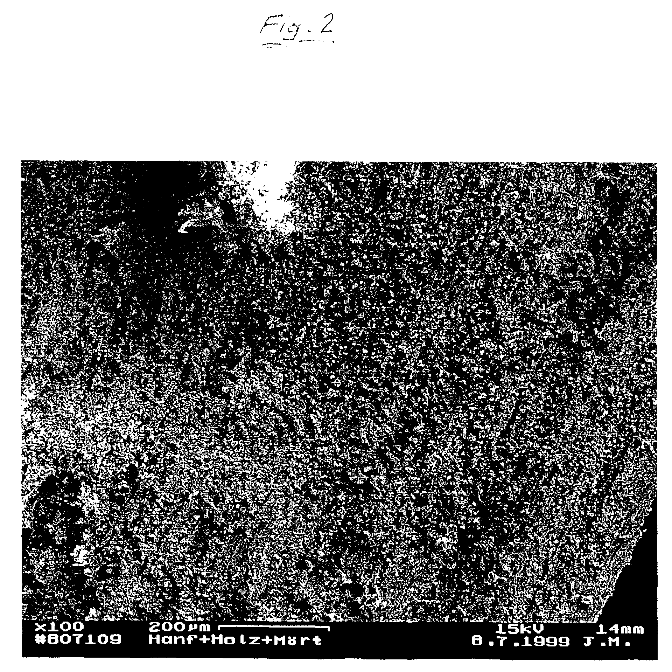

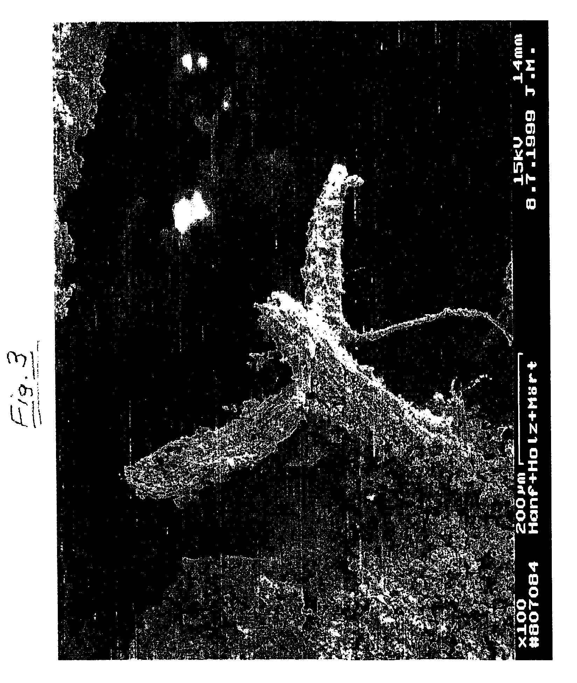

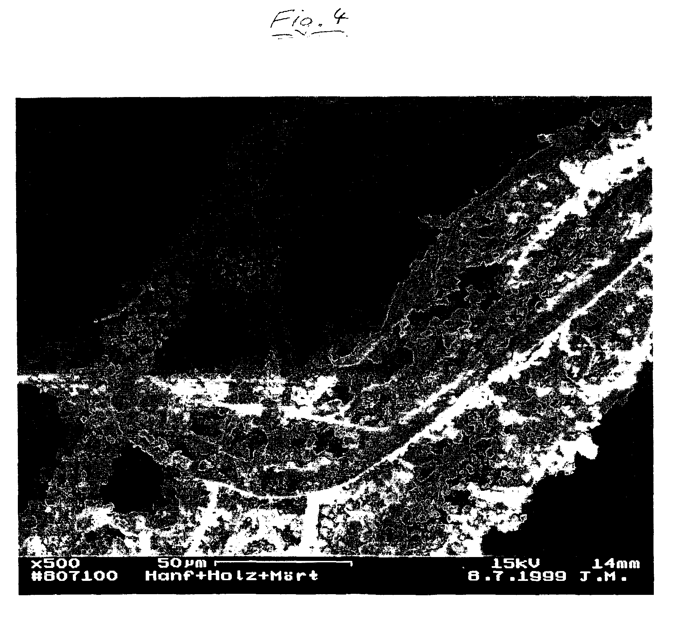

Um diese Aufgabe zu lösen wird gemäss dem Verfahren nach Anspruch 1 Zement als Mineralisator verwendet. Dieser Mineralisator, der aus rein anorganischen Komponenten besteht und sehr preiswert ist im Vergleich zu den vorher bekannten Mineralisatoren, erzeugt eine Schicht auf der Oberfläche der Holzteilchen, ohne die Poren im Inneren des Holzes zu füllen. Dieser überraschende Befund konnte mittels Rasterelektronenmikroskopie und Lichtmikroskopie eindeutig nachgewiesen werden. Es wurde auch gefunden, dass mit dem gleichen Mineralisator ebenfalls andere Rohstoffe wie zerkleinerte oder gemahlene Hanfstängel oder Hanfmehl, mineralisiert werden können, wobei auch eine Beschichtung der Oberfläche des Hanfes erfolgt, ohne die Poren im Innern des Hanfes zu füllen. Auch dies konnte durch Rasterelektronenmikroskopie und Lichtmikroskopie eindeutig nachgewiesen werden wie aus den beiliegenden Figuren 1-4 ersichtlich. Die Holz- und Hanfteilchen können gleichzeitig vormineralisiert werden. Schilfrohrteilchen wie z.B. zerkleinerte oder gemahlene Schilfrohrstängel oder Schilfrohrmehl können auch gleichzeitig mitmineralisiert werden.

Zur Mineralisierung wird der Mineralisator, vorzugsweise Portlandzement CEM I, 42,5, mit Wasser im Verhältnis von 20-50 kg, vorzugsweise 30 kg, Minderalistor pro 1000 l Wasser vermischt. Die Rohstoffteilchen werden während 10-20 Minuten, vorzugsweise 12 Minuten, mit der den Mineralisator enthaltenen Flüssigkeit benetzt z.B. besprüht. Die Temperatur der Mineralisatorflüssigkeit soll über dem Gefrierpunkt liegen und vorzugsweise etwa 20° C nicht übersteigen. Die vormineralisierten Rohstoffe können nach der eigentlichen Mineralisierung in einem Fliessbettverfahren getrocknet werden.

Die Rohstoffteilchen haben vorzugsweise einen Durchmesser von 0,5 bis 5,0 mm und eine Länge von 5,0 bis 40,0 mm.

Bei den zu mineralisierenden Holzteilchen handelt es sich hauptsächlich um Nadelholzspäne, Nadelholzsägemehl oder dergleichen.

Vormineralisierte Rohstoffteilchen können unter Zuschlag eines Bindemittels wie Zement, z.B. Portlandzement, verwendet werden zur Herstellung von Holzbeton, Bauteilen, Mörtel, wie z.B. Fertigmörtel für Innen- und Aussenputz, und dergleichen, gegebenenfalls unter Zugabe von Anmachwasser.

Zur Herstellung von Holzbeton werden mit einem Zement-Wassergemisch oder auch anders vormineralisierte Nadelholzspäne mit oder ohne vormineralisiertes Holzsägemehl, vorzugsweise Nadelholzsägemehl, mit Zement als Bindemittel und Anmachwasser verwendet. Vormineralisiertes Sägemehl wird insbesondere für Innenwände zugesetzt. Zur Herstellung von Wandteilen, Dämmplatten, Mauersteinen und dergleichen wird ein Gemisch aus vormineralisierten Holzspänen oder -mehl, vorzugsweise Nadelholzspänen oder -mehl und vormineralisierte, zerkleinerte oder gemahlene Hanfstängel und/oder Schilfrohrstängel verwendet, ebenfalls mit Zement als Bindemittel und Anmachwasser. Dabei sind vorzugsweise etwa 75% Holzanteile und 25% Hanfanteile und/oder Schilfrohranteile vorgesehen. Die Holz- und Hanfanteile und/oder Schilfrohranteile haben einen Durchmesser von 0,5 bis 5,0 mm und eine Länge von 5,0 bis 40,00 mm. Als Bindemittel wird - wie schon erwähnt - vorzugsweise Portlandzement CEM I, 42,5 verwendet.

Mit einem Zement-Wassergemisch oder auch anders vormineralisierte Holz-, vorzugsweise Nadelholzteilchen mit Hanf- und/oder Schilfrohrteilchen können auch zur Herstellung von Fertigmörtel z.B. für Innen- und Aussenputz benutzt werden, vermischt mit Zement, z.B. Portlandzement und/oder Kalk als Bindemittel. Hierzu wird vormineralisiertes Nadelholzsägemehl und vormineralisierte, gemahlene Hanfstängel und/oder Schilfrohrstängel mit einer Korngrösse von bis zu 2,5 mm verwendet. Dies ergibt eine gute Haufwerksporigkeit, welche eine gute Atmungsaktivität gewährleistet. Das Mischungsverhältnis beträgt vorzugsweise etwa 60% Nadelholzmehl und 40% Hanfmehl und/oder Schilfrohrmehl. Als Bindemittel wird vorzugsweise Portlandzement und/oder Kalk verwandt in einem Mischungsverhältnis von etwa 56% Portlandzement und 44% Kalk. Portlandzement und Kalk werden aus Kalkstein hergestellt, das aus dem gleichen Steinbruch stammen soll, um eine einwandfreie Materialverträglichkeit zu gewährleisten.

Wie erwähnt kann die Trocknung des vormineralisierten Holz- und Hanfmehls und/oder Schilfrohrmehls in einem Fliessbettrockner erfolgen. Der Trocknungsvorgang dauert etwa 9 Minuten bei einer Temperatur von 200°C. Nach der Trocknung beträgt die Restfeuchte etwa 1,3%. Somit kann das Material nach Dosierung mit dem Bindemittel in Säcke oder Silos abgepackt und zur Baustelle transportiert werden. Nach Zugabe von Anmachwasser ist der Putz verarbeitungsfertig. Der Putz kann sowohl von Hand als auch mit einer Putzmaschine verarbeitet werden.

Gegenüber dem bekannten Fertigmörtel mit Sand aus Hartgestein als Zuschlagsstoff und Zement oder Gips als Bindemittel ist der Putz aus vormineralisierten Nadelholzspänen oder Nadelholzsägemehl und/oder Hanf- und Schilfrohrmehl mit Portlandzement und/oder Kalk als Bindemittel vorteilhaft betreffend die Atmungsfähigkeit, die Dampfdiffusion und die Wärmedämmung. Im Vergleich zu dem hierin beschriebenen Putz sind die bekannten Putze nicht ökologisch und haben ein zu hohes Volumengewicht.

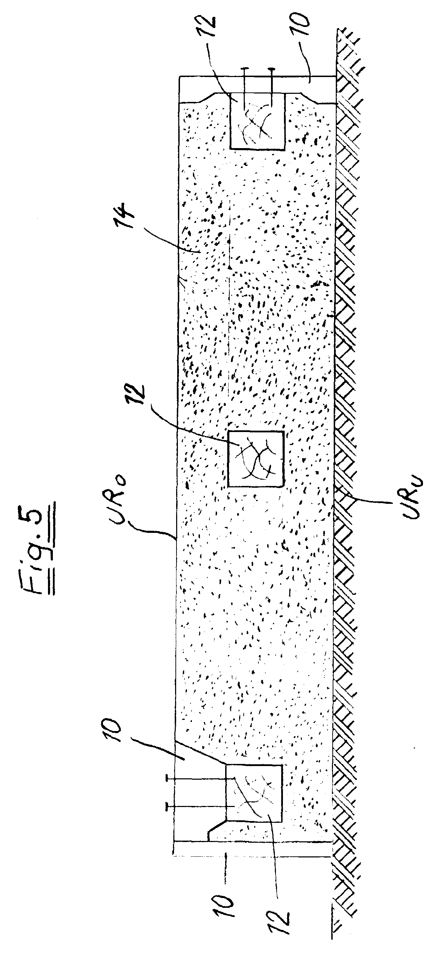

Die Erfindung betrifft auch ein Verfahren zur Herstellung von Holzbetonfertigteilen aus den mit einem Zement-Wassergemisch vormineralisierten Holzteilchen und Zement als Bindemittel und einer mit einem Zement-Wassergemisch vormineralisierten, tragenden Holzfachwerkstruktur 12 (Figur 5), wobei die Holzfachwerkstruktur 12 in einem horizontal liegenden Schalungsrahmen in Abstand vom oberen und unteren Umfangsrand URo, URu des Rahmens 10 befestigt wird und anschliessend der Holzbeton 14 in die verbleibenden Hohlräume des Schalungsrahmens und der Fachwerkstruktur eingefüllt wird. Der Holzbeton kann auch vormineralisierte Hanf- und Schilfrohrstängel enthalten.

Die Figur 5 zeigt den Schalungsrahmen 10 mit der in dem Schalungsrahmen 10 befestigten Holzfachwerkstruktur 12 und dem eingefüllten Holzbeton 14. Nach dem Erhärten des Betons 14 wird der Rahmen 10 von der Holzfachwerkstruktur 12 gelöst und die gesamte Schalung wird zur Wiederverwendung entfernt. Die tragende Holzfachwerkstruktur des ausgeschalten Holzbetonfertigteiles ist nur an Seitenflächen des Fertigbauteiles sichtbar, wo die Holzfachwerkstruktur an dem Schalungsrahmen befestigt war oder an anderen Stellen wo die Verbindung des Fertigteiles mit anderen Fertigteilen erfolgen soll. Die tragende Holzfachwerkstruktur ist an den Sichtflächen des Holzbetonfertigbauteiles dagegen nicht zu erkennen. Demgemäss ist in einem zusammengebauten Holzbetonhaus mit Fertigbauteilen gemäss der Erfindung die tragende Holzfachwerkstruktur weder von aussen noch von innen sichtbar. Zu erkennen sind nur die Holzbetonflächen, welche mit dem erfindungsgemässen Innen- und Aussenputz überzogen werden können. Die Hauskonstruktion aus nachwachsenden Rohstoffen wie Holz, Hanf und Schilfrohr kann mit den anderen Bauteilen der Erfindung fertiggestellt werden.

## Patentansprüche

1. Verfahren zur Vormineralisierung von nachwachsenden faserigen Rohstoffteilchen wie z.B. Holz-, Hanf- und/oder Schilfrohrteilchen oder dergleichen, wobei die Rohstoffteilchen mit einer ein Mineralisator enthaltenen Flüssigkeit behandelt werden, dadurch gekennzeichnet, dass als Mineralisator Zement verwendet wird.

2. Verfahren nach Anspruch 1, dadurch gekennzeichnet, dass als Mineralisator Portlandzement verwendet wird.

3. Verfahren nach Anspruch 1 oder 2, dadurch gekennzeichnet, dass der Mineralisator mit Wasser im Verhältnis von 20-50 kg, vorzugsweise 30 kg, Mineralisator pro 1000 l Wasser vermischt wird.

4. Verfahren nach einem der Ansprüche 1 bis 3, dadurch gekennzeichnet, dass die Rohstoffteilchen während 10- 20 Minuten, vorzugsweise 12 Minuten, mit der den Mineralisator enthaltenen Flüssigkeit benetzt, z.B. besprüht werden.

5. Verfahren nach einem der Ansprüche 1 bis 4, dadurch gekennzeichnet, dass die vormineralisierten Rohstoffteilchen nach der Benetzung getrocknet werden.

6. Verfahren nach einem der Ansprüche 1 bis 5, dadurch gekennzeichnet, dass die Holzteilchen Nadelholzspäne oder Nadelholzsägemehl sind.

7. Verfahren nach einem der Ansprüche 1 bis 6, dadurch gekennzeichnet, dass die Hanfteilchen und/oder Schilfrohrteilchen zerkleinerte oder gemahlene Hanfstängel oder Hanfmehl bzw. Schilfrohrstängel oder Schilfrohrmehl sind.

8. Verfahren nach einem der Ansprüche 1 bis 7, dadurch gekennzeichet, dass Rohstoffteilchen mit einem Durchmesser von 0,5 bis 5,0 mm und einer Länge von 5,0 bis 40,0 mm vormineralisiert werden.

9. Verfahren nach einem der Ansprüche 1 bis 8, dadurch gekennzeichnet, dass die Holz-, Hanf- und/oder Schilfrohrteilchen gleichzeitig vormineralisiert den.

10. Verwendung von gemäss dem Verfahren nach einem der Ansprüche 1 bis 9 vormineralisierten Rohstoffteilchen vermischt mit Zement als Bindemittel zur Herstellung von Holzbeton, Bausteinen, Wandteilen, Dämmplatten, Mörtel, wie z.B. Fertigmörtel für Innen- und Aussenputz, und dergleichen, gegebenenfalls unter Zufügung von Anmachwasser.

11. Verwendung nach Anspruch 10, wobei zur Herstellung von Wandteilen, Dämmplatten, Bausteinen und dergleichen etwa 75% vormineralisierte Holzspäne, vorzugsweise Nadelholzspäne, mit etwa 25% vormineralisierte Hanfstängel und/oder Schilfrohrstängel benutzt werden.

12. Verwendung nach Anspruch 10, wobei zur Herstellung von Holzbeton vormineralisierte Holzspäne, vorzugsweise Nadelholzspäne gegebenenfalls mit vormineralisiertem Holzsägemehl, vorzugsweise Nadelholzsägemehl vermischt werden im Verhältnis von etwa 15% Sägemehl und etwa 85% Späne.

13. Verwendung nach Anspruch 10, wobei zur Herstellung von Fertigmörtel für Innen- und Aussenputz vormineralisiertes Holzsägemehl, vorzugsweise Nadelholzsägemehl, vormineralisierte, gemahlene Hanfstängel und/oder vormineralisiertes, gemahlenes Schilfrohr mit Zement, und/oder Kalk als Bindemittel vermischt werden.

14. Verwendung nach Anspruch 13, wobei die vormineralisierten Rohstoffteilchen zu etwa 60% aus Nadelholzsägemehl und zu etwa 40% aus gemahlenen Hanfstängel und/oder Schilfrohrstängel bestehen.

15. Verwendung nach Anspruch 13, wobei als Bindemittel etwa 56% Portlandzement und etwa 44% Kalk benützt wird.

16. Verfahren zur Herstellung von HolzbetonFertigbauteilen aus gemäss den Ansprüchen 1 bis 9 vormineralisierten Holzteilchen mit Zement als Bindemittel und einer in gleicher Weise vormineralisierten, tragenden Holzfachwerkstruktur, dadurch gekennzeichnet, dass die Holzfachwerkstruktur in einem horizontal liegenden Schalungsrahmen in Abstand vom oberen und unteren Umfangsrand des Schalungsrahmens befestigt wird und anschliessend der Holzbeton bestehend aus den vormineralisierten Holzteilen, dem Bindemittel und Anmachwasser in die verbleibenden Hohlräume des Schalungsrahmens und der vormineralisierten Holzfachwerkstruktur eingefüllt, und der Schalungsrahmen nach dem Erhärten des Holzbetons entfernt wird.

17. Bauteile wie z.B. Wandteile, Dämmplatten und Mauersteine aus gemäss einem der Ansprüche 1 bis 9 vormineralisierten Holzspänen, vorzugsweise Nadelholzspänen und/oder Holzsägemehl, vorzugsweise Nadelholzsägemehl und vormineralisierten, zerkleinerten oder gemahlenen Hanfstängeln und/oder Schilfrohrstängeln, sowie einem ausgehärteten Zement-Bindemittel.

18. Bauteile nach Anspruch 17, wobei die vormineralisierten Rohstoffteilchen zu etwa 75% aus Nadelholzteilchen und etwa 25% aus Hanfstängeln und/oder Schilfrohrstängeln bestehen.

19. Fertigmörtel, insbesondere zur Verwendung als Innen- und Aussenputz, bestehend aus gemäss dem Verfahren nach einem der Ansprüche 1 bis 9 vorminderalisierten Holzsägemehl, vorzugsweise Nadelholzsägemehl, gemahlenen Hanfstängeln und/oder gemahlenen Schilfrohrstängeln mit Zement und/oder Kalk als Bindemittel.

20. Fertigmörtel nach Anspruch 19, wobei die vormineralsisierten Rohstoffteilchen zu etwa 60% aus Nadelholzsägemehl und etwa 40% aus gemahlenen Hanfstängeln und/oder Schilfrohrstängeln bestehen.

21. Fertigmörtel nach Anspruch 19 oder 20, wobei das Bindemittel zu etwa 56% aus Portlandzement und etwa 44% aus Kalk besteht.

22. Holzbetonfertigbauteil aus einer mit einem Zement-Wassergemisch vormineralisierten, tragenden Holzfachwerkstruktur, die im wesentlichen vollständig eingegossen ist in Holzbeton aus gemäss dem Verfahren nach einem der Ansprüche 1 bis 9 vormineralisierten Rohstoffteilchen, insbesondere Nadelholzspänen, wobei die Holzfachwerkstruktur vorzugsweise ausser an den Stellen zur Verbindung mit benachbarten Holzbetonfertigbauteilen im wesentlichen unsichtbar ist.

23. Bauteile wie z.B. Wandteile, Dämmplatten und Mauersteine aus nachwachsenden, fasrigen Rohstoffteilchen bestehend aus vormineralisierten Holzspänen und/oder Holzsägemehl sowie aus vormineralisierten, zerkleinerten oder gemahlenen Hanfstängeln und/oder Schilfrohrstängeln so wie einem ausgehärteten Zement-Bindemittel.

24. Bauteile nach Anspruch 23, wobei die Rohstoffteilchen zu etwa 75% aus Holzteilchen und etwa 25% aus Hanfstängeln und/oder Schilfrohrstängeln bestehen.

25. Fertigmörtel, insbesondere zur Verwendung als Innen- und Aussenputz aus vormineralisierten, nachwachsenden, fasrigen Rohstoffteilchen bestehend aus Holzsägemehl, vorzugsweise Nadelholzsägemehl, sowie aus gemahlenen Hanfstängeln und/oder gemahlenen Schilfrohrstängeln mit Zement und/oder Kalk als Bindemittel.

26. Fertigmörtel nach Anspruch 25, wobei die vormineralisierten Rohstoffteilchen zu etwa 60% aus Nadelholzsägemehl und etwa 40% aus gemahlenen Hanfstängeln und/oder Schilfrohrstängeln bestehen.

27. Fertigmörtel nach Anspruch 25 oder 26, wobei das Bindemittel zu etwa 56% aus Portlandzement und zu etwa 44% aus Kalk besteht.
